# EUROPEAN PATENT SPECIFICATION

(11) **EP 3 790 649 B1**
(45) Date of publication and mention of the grant of the patent: **09.10.2024**
(21) Application number: 19720912.5
(22) Date of filing: 06.05.2019
(51) Int. Cl.: B01F 23/213, B01F 25/314, B01F 25/431, B01F 25/432, B01F 25/433, B01F 25/435, F01N 13/02, F01N 3/20, F01N 3/28, B01F 25/00

(54) **COMPACT EXHAUST MIXING SYSTEM**
KOMPAKTES ABGASMISCHSYSTEM
SYSTÈME DE MÉLANGE D'ÉCHAPPEMENT COMPACT

(30) Priority: 07.05.2018 EP 18171059
(43) Date of publication of application: 17.03.2021
(73) Proprietor: Dinex A/S, 5500 Middelfart (DK)
(72) Inventor: ANDERSEN, Kasper Steen, 5500 Middelfart (DK); BEBE, Jim Elkjaer, 5500 Middelfart (DK); RANAWAT, Mahipat Balwant, 5500 Middelfart (DK); MAYNTZHUSEN, Per, 5500 Middelfart (DK)
(74) Representative: Kjerrumgaard, Lars Bo
(86) International application number: PCT/EP2019/061541
(87) International publication number: WO 2019/215081

(56) References cited:
- EP-A1- 2 732 869
- EP-A1- 2 843 306
- WO-A1-2017/215460
- DE-A1- 102008 029 809
- DE-A1- 102009 036 511
- US-A1- 2008 307 780

## Description

### FIELD OF THE INVENTION

The present invention relates to a device for evaporating liquid spray and subsequent mixing into exhaust gases from a combustion engine.

### BACKGROUND OF THE INVENTION

Achieving effective evaporation of aqueous urea solution coming from dosing modules, homogenous mixing of the resulting reductant products like ammonia into the exhaust gas, and thereafter homogenous distribution over the catalytic components is a known challenge in the field of exhaust after-treatment systems. Several of inventions have been proposed to achieve this, while minimizing risk of urea deposits, minimizing backpressure and minimizing space requirement. Exhaust after-treatment systems comprising Selective Catalytic Reduction (SCR) systems may be included downstream of a combustion engine to remove or reduce nitrogen oxides (NOx) emissions coming from an engine. The SCR systems include the introduction of a reductant to the exhaust stream. Mixers are added to help mix the reductant in the exhaust stream. Thorough mixing may help the performance by ensuring a homogeneous distribution of reductant, which enables the catalytic reactions to elapse uniformly across the cross section of the catalyst, thus minimizing ammonia slip and NOx emitted. US2010139258 relates to exhaust mixing systems, and more particularly to mixing systems for SCR systems. DE 10 2009 036 511 discloses a device according to the preamble of claim 1.

### SUMMARY OF THE INVENTION

The present invention solves many of the problems with the prior art mixing systems for after-treatment systems, while differentiating itself from existing mixing systems. The result is a compact mixing system that meets the functionality requirements, but is also easy to manufacture, can be employed with multiple different type of dosing modules, with both axial and radial dosing, with multiple dosing modules, and can be scaled for different catalyst diameters. The present invention concerns a new compact exhaust mixing system which is a part of the exhaust after-treatment system of a vehicle. In the after-treatment system noxious exhaust gas out of vehicle engines passes through an oxidation catalyst, such as a Diesel Oxidation Catalyst (DOC) and/or a particulate filter, such as a Diesel Particulate Filter (DPF) and then into the compact exhaust mixing system of the present invention.

Typically, the mixing system evaporates aqueous urea solution into the reductant, ammonia, and mixes reductant well with exhaust gas in a short distance. It spreads the mixture of exhaust gas and reductant across the face of a Selective Catalytic reduction (SCR) catalyst or a SCR on filter catalyst for reduction of NOx to harmless nitrogen and water. In this respect, aqueous urea solution is injected under pressure into the mixing system via the reductant dosing module to form a liquid spray which is allowed to fully evolve prior to impact with metal parts.

It is an object of the present invention to provide a device according to claim 1.

In an embodiment the flow guiding device comprises a nozzle for directing the exhaust gases towards the flow deflecting device. In another embodiment the flow guiding device comprises a nozzle for directing the exhaust gases and liquid droplets towards the flow deflecting device.

In a further embodiment the flow guiding device comprises a plurality of guiding vanes for diffusing the flow towards the flow deflecting device. In another embodiment the flow guiding device comprises a plurality of guiding vanes for diffusing the flow towards the flow deflecting device and also facilitating evaporation of liquid droplets.

In a still further embodiment the flow guiding device comprises a plurality of bypass openings arranged along the perimeter of the flow guiding device.

In a further embodiment the flow deflecting device is arranged to deflect the flow in a generally backward direction.

In a still further embodiment the flow deflecting device comprises a conical bulge in its centre.

According to the invention the device of the present invention comprises a swirling baffle located at the redirecting zone and fixed to the flow deflecting device, in particular to the exterior of the flow deflecting device. The swirling baffle further comprises openings and/or swirling vanes. Preferably, the swirling baffle is also fixed to the housing.

In a still further embodiment the bypass opening, and the swirling baffle are located facing each other. Typically, the swirling baffle is located between the conical bulge and the bypass opening. This is when seen from the cross section of the housing wherein inlet defines one end and outlet defines another end and flow guiding device and deflection device are in between.

In a further embodiment the device of the present invention comprises a dosing module for inserting the liquid into the exhaust gases located between the inlet of the exhaust gases and the flow guiding device. Typically, the dosing module is a pressure atomizer. Alternatively, the dosing module is an air-assisted atomizer.

In a still further embodiment the dosing module is arranged in an axial manner relative to the longitudinal axis of the housing. In another embodiment the dosing module is arranged in a radial manner relative to the longitudinal axis of the housing.

In a further embodiment the dosing module further comprises an injection protection attachment.

In a still further embodiment the device of the present invention comprises at least one additional dosing module. Typically, 2 or more dosing modules may be present, such as 2 wherein one may be arranged axially and the other may be arranged radially.

In a second aspect the present disclosure relates to an after-treatment system of the exhaust gases from a combustion engine characterised in that it comprises at least one device of the present invention as well as any one of the above embodiments.

In an embodiment of the second aspect the after-treatment system further comprises a particulate filter. Typically, a DPF.

In a further embodiment of the second aspect the after-treatment system further comprises a SCR catalyst. Typically, the SCR catalyst is on filter.

In a still further embodiment of the second aspect the after-treatment system further comprises an Oxidation Catalyst, such as a DOC.

In a further embodiment of the second aspect the after-treatment system further comprises an Ammonia Slip Catalyst.

In a still further embodiment of the second aspect the after-treatment system is arranged in a linear manner. Alternatively, the after-treatment system is arranged in a switchback manner.

In a third aspect the present disclosure relates to use of at least one device of the present invention as well as any one of the above embodiments for evaporating liquid spray and subsequent mixing into exhaust gases of a combustion engine.

In an embodiment the combustion engine is a Diesel engine.

In another embodiment the combustion engine is an Otto engine.

In a further embodiment the combustion engine is an Atkinson engine.

In a fourth aspect the present disclosure relates to a vehicle characterised in that it comprises an after-treatment system of the present invention as well as any one of the above embodiments.

In an embodiment the vehicle is powered by a Diesel engine.

In another embodiment the vehicle is powered by an Otto engine.

In a further embodiment the vehicle is powered by an Atkinson engine.

In a further aspect the present disclosure relates to use of at least one device of the present invention as well as any one of the above embodiments in connection with construction of an after-treatment system for exhaust gas.

Further objects and advantages of the present invention will appear from the following description, and claims.

### BRIEF DESCRIPTION OF DRAWINGS

Figure 1 illustrates an after-treatment system comprising the device of the present invention for evaporating liquid spray and subsequent mixing into exhaust gases from a combustion engine.
Figure 2 illustrates the after-treatment system of figure 1.
Figure 3 illustrates an embodiment of the mixing device of the present invention as a cross sectional 3D like view.
Figure 4 illustrates an embodiment of the mixing device of the present invention as a cross sectional view.
Figure 5 is an exploded view of the housing and parts inside the housing of an embodiment of the device of the present invention.
Figure 6 illustrates an embodiment of a flow guiding device with openings for bypass.
Figure 7 illustrates an embodiment of a flow deflecting device with swirling baffle.

### DESCRIPTION OF THE INVENTION

There are many advantages of the present invention in a broad context as well as further even more advantages aspects of the embodiments.

Achieving effective evaporation of aqueous urea solution coming from dosing modules, homogenous mixing of the resulting reductant products like ammonia into the exhaust gas, and thereafter homogenous distribution over the catalytic components is a known problem in the field of the invention. Several of prior art devices have been proposed to achieve this, while minimizing risk of urea deposits, minimizing backpressure and minimizing space requirement.

The present invention achieves all the above, while differentiating itself from existing devices. The result is a compact mixing system that meets the functionality requirements, but is also easy to manufacture, can be employed with multiple different dosing modules, with both axial and radial dosing, with multiple dosing modules, and can be scaled for different catalyst diameters. Another advantage of the present invention is that more than one mixing devices can be used in tandem. The Partial bypass openings of flow in the flow guiding device aids in mandatory flow reversal. When present, post-injection flow guiding device with perforations receiving the flow, this allows the spray to fully evolve prior to impact with metal parts. The vanes in the flow guiding device is for diffusing flow and evaporating liquid. The swirling baffle on the flow deflecting device addresses low pressure zone behind it. The swirling baffle transfers heat from exhaust gas to flow deflecting device minimizing deposit issues. Injection can happen axially and radially (radial shown in figures). This injection allows for multiple different position of the dosing module in combination with multiple different exhaust gas inlets, inlet, and it also allows for multiple different dosing units with different droplet sizes. For air-assisted dosing system, an extra device may be added on the nozzle, such as a dosing module injection protection attachment. The term "a liquid" as used herein refers to a liquid suitable for forming a reductant reducing the noxious gases, such as DEF (Diesel Exhaust Fluid), and urea water solution.

The term "a longitudinal axis" as used herein refers to a fictive axis inside the housing defining the orientation of the housing for exhaust gas flow and location of flow guiding device and flow deflecting device.

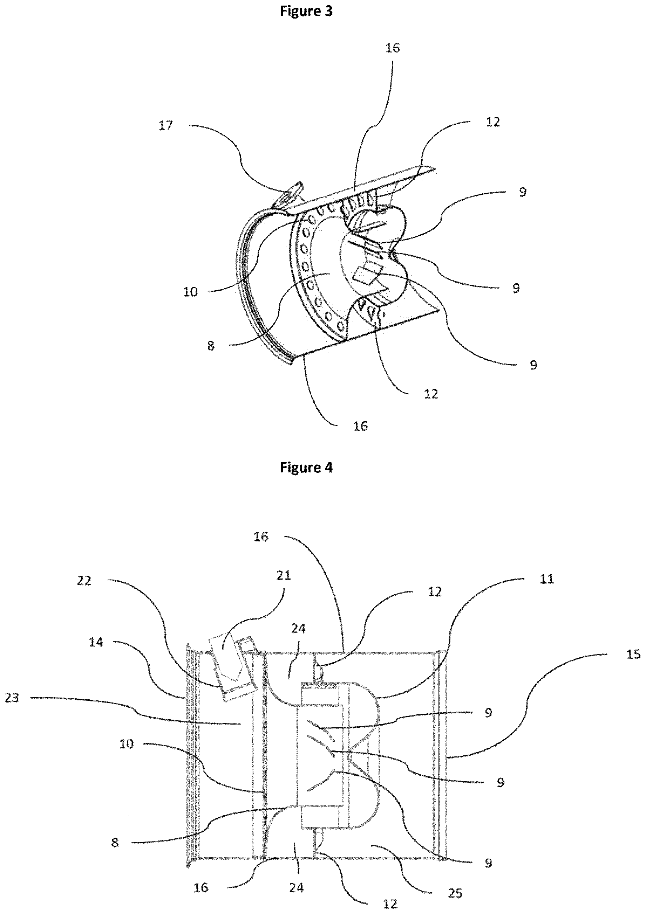

The term "a redirecting zone" as used herein in relation to redirecting the flow coming from the deflecting device to the outlet refers to the zone created by the wall of the housing, the flow guiding device and the flow deflection device, which is also illustrated in figure 4 as reference number (24).

The term "a bypass opening" as used herein refers to openings of any dimension as long as they are sufficiently large to aid in needed flow reversal, such as circular, polygonal, or other openings. The openings establish a fluid communication between a zone upstream the flow guiding device and the redirecting zone, thereby bypassing the deflection device and the vanes. Fluid means both liquid and gas and cover liquid, gas as well as mixtures of liquid and gas.

The term "a nozzle" as used herein refers to a short tube with a taper or constriction used (as on a hose) to speed up or direct a flow of fluid. The term nozzle includes that the flow guiding device has a contraction.

As mentioned herein the flow guiding device comprises a plurality of guiding vanes for diffusing the flow towards the flow deflecting device. The plurality refers to 2 or more vanes located inside the flow guiding device, and typically 1-5 guiding vanes, such as 3 guiding vanes. More guiding vanes may be contemplated depending on the dimensions hereof.

As mentioned herein the flow guiding device comprises a plurality of bypass openings arranged along the perimeter of the flow guiding device. The plurality refers to 2 or more openings and typically 15-30, such as 20-25 openings. More openings may be contemplated depending on the dimensions hereof.

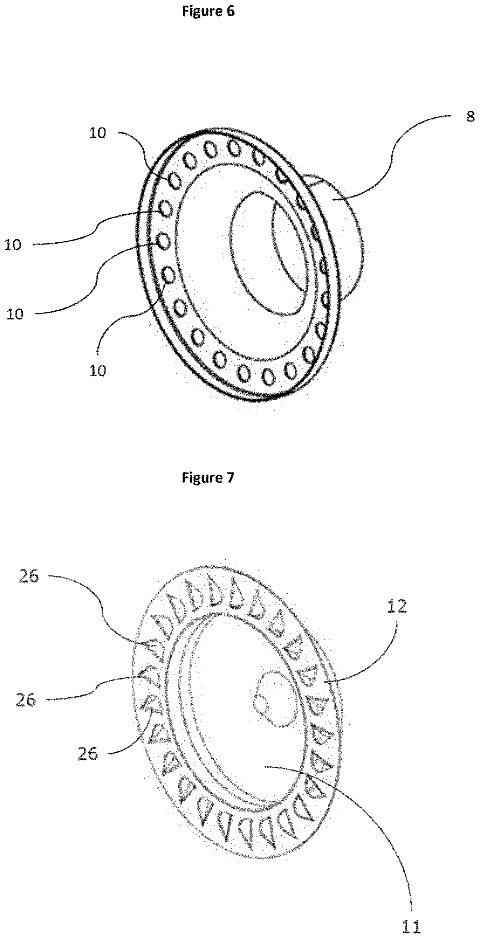

The term "swirling baffle" as used herein refers to a wall with openings and/or swirling vanes. for creating swirling of the gases. The typical form of such baffles are annular rings, and one embodiment is shown in figure 7.

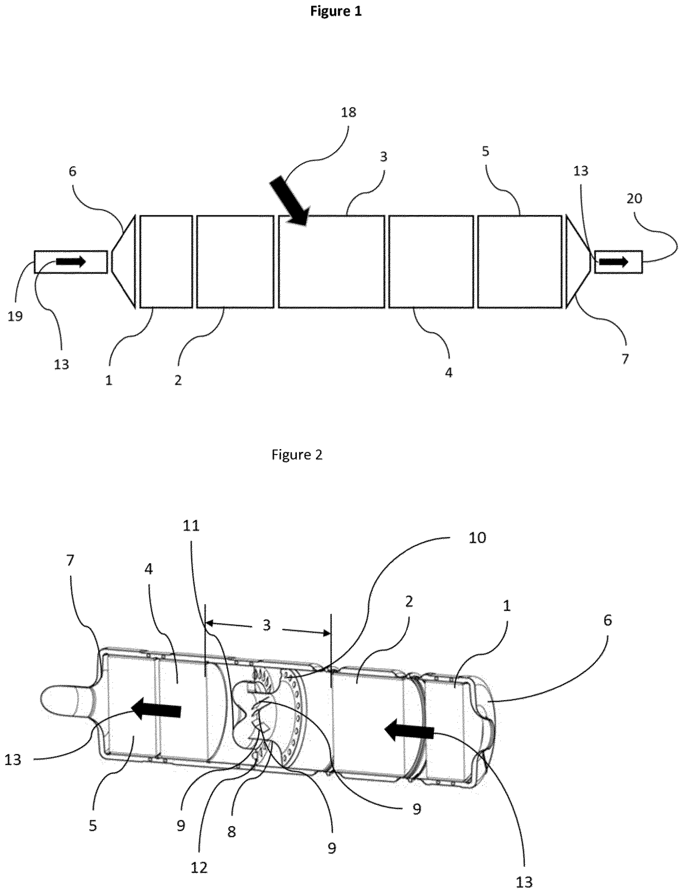

The method and device according to the present invention will now be described in more detail with regard to the accompanying figures 1-7. The figures show one way of implementing the present invention and is not to be construed as being limiting the present invention in any way.

Flow guidance device vanes (9) are assembled into flow guidance device (8) by welding, brazing, or any other secure attachment method known to one skilled in the art. Flow guidance device (8) with flow guidance device openings (10) can be produced by pressing, deep drawing, punching or any other metal working method known to one skilled in the art. Flow guidance device with vanes is assembled into the position and with the housing by welding, brazing, or any other secure attachment method known to one skilled in the art.

Flow deflecting device (11) can be produced by deep drawing, spinning or any other metal forming method known to one skilled in the art. Swirling baffle (12) can be produced in one piece using pressing and punching operation. Swirling baffle (12) is secured to flow deflecting device (11) and the housing (16) using welding, brazing, or any other secure attachment method known to one skilled in the art.

Housing (16) can be produced by rolling sheet metal, welding or brazing the seam and form the ends. Injection protection attachment (22) can be produced by rolling pre-cut sheet metal blank and welding it.

Material to be used can be stainless steel that has low thermal expansion, urea corrosion resistant and having good formability and weldability.

Figure 1 illustrates an after-treatment system having an entrance (19) for exhaust gases entering the after-treatment system, wherein the arrow (13) indicates the exhaust stream direction. During operation the exhaust gases enters first an inlet module (6), then a DOC (1) and hereafter a DPF (2). The device (3) for evaporating liquid spray, such as a reductant, and subsequent mixing (18) into exhaust gases from a combustion engine is located after the DPF (2) and before a SCR (4). After the exhaust gases have been treated with reductant in the mixing system (3), the gases are transported into the SCR (4) and then through a zone (5) with SCR catalyst with an ammonia oxidation zone. Hereafter, the treated exhaust gases leaves the after-treatment system through first an outlet module and then through an exit (20) and with flow direction (13) as shown.

Figure 2 illustrates the after-treatment system of figure 1 shown as a cross-sectional view, except for the entrance (19) and exit (20). Exhaust gas (13) enters the exhaust mixing system (3) through the mixing system inlet which begins after the exhaust gas leaves the DPF (2), and then moves to the flow guiding device (8) having vanes (9) wherein aqueous urea solution is introduced into the exhaust gas as a spray via a reductant dosing module (18, of figure 1). The aqueous urea solution spray is allowed to fully evolve into maximum number of droplets prior to impact with metal parts. The exhaust gas carrying aqueous urea solution droplets is collected and led through the flow guiding device (8), wherein the droplets partially impinge on the flow guiding device vanes (9) and subsequently evaporates to form gaseous ammonia. The exhaust gas carrying gaseous ammonia is led through the flow guiding device (8) and to a flow deflecting device (11) where the flow is reversed 180° and led through openings (indicated as (26) in figure 7) of the swirling baffle (12) towards the outlet module (7) via the SCR (4) and SCR ammonia oxidation zone (5). At the same time as the exhaust gas carrying aqueous urea solution droplets is collected and led through the flow guiding device (8), the exhaust gas also passes through bypass openings (10) in the flow guiding device (8). Exhaust gas having passed through the flow deflecting device (11) and the bypass openings (10) in the flow guiding device (8) are mixed and transported in the general direction of the exhaust gas flow (13). The mixed gaseous flow passes through the swirling baffle (12), which causes the flow to adopt a swirling motion which aids in mixing and prevents a low-pressure zone on the back side (opposite the side where exhaust gas carrying the aqueous urea solution droplets hits the deflection device (11) and the flow is reversed 180°) of the flow deflecting device (11). The homogeneously mixed gaseous will then pass through the SCR (4) and continue as described above.

Figure 3 illustrates the mixing device of the present invention seen as a 3D like cross section. The mixing device (3) comprises a housing (16) that is cylindrical and defines a longitudinal axis. In the housing (16) a fixture (17) adapted to receive a dosing module with a reductant, such as urea water solution, to be sprayed into the exhaust gases when the after-treatment system is in operation in a vehicle, such as a diesel truck or the like. As also explained above in figure 2, the housing comprises a flow guiding device (8) having incorporated vanes (9), and with bypass openings (10) in the periphery of the circular flow guiding device (8). To create a 180° reversal of the exhaust gas flow during operation a flow deflecting device is arranged in the longitudinal axis in the housing so that exhaust gas flow moves via the guiding device (8) and is forced into reversed flow by means of the flow deflecting device (indicated as 11 in figure 2) having swirling baffle (12) located in the periphery of the circular flow deflecting device.

Figure 4 is a cross sectional view of the mixing device of the present invention ((3) as shown in figures 2 and 3). The exhaust gases, when the after-treatment system is in operation with the engine running, will enter the inlet (14) of the housing (16) of the mixing device and flow through an inlet zone or upstream zone (23) before coming to the flow guiding device (8) located within the housing (16). The exhaust gases passing through the flow guiding device (8) and being transported via the deflecting device (11) will be mixed in a redirecting zone (24) for redirecting the flow coming from the deflecting device (11) towards the outlet (15) of the housing (16), with the exhaust gas flow passing through the openings (10) of the flow guiding device (8). The gases of the redirecting zone (24) are then transported through openings in the swirling baffle (12) into an outlet zone or down stream zone (25) and further via the outlet (15) of the housing (16), and into the SCR (not shown). Further an air assisted reductant dosing module (21) is arranged in the housing (16) wherein a liquid, such as aqueous urea solution, in particular urea water solution, is inserted into the exhaust gases during operation, so that at least some of the exhaust gas mixed with solution of urea will impinge with the vanes (9) and evaporate. A dosing module injection protection attachment (22) is indicated for protection of the aqueous urea solution spray from the dosing module (21).

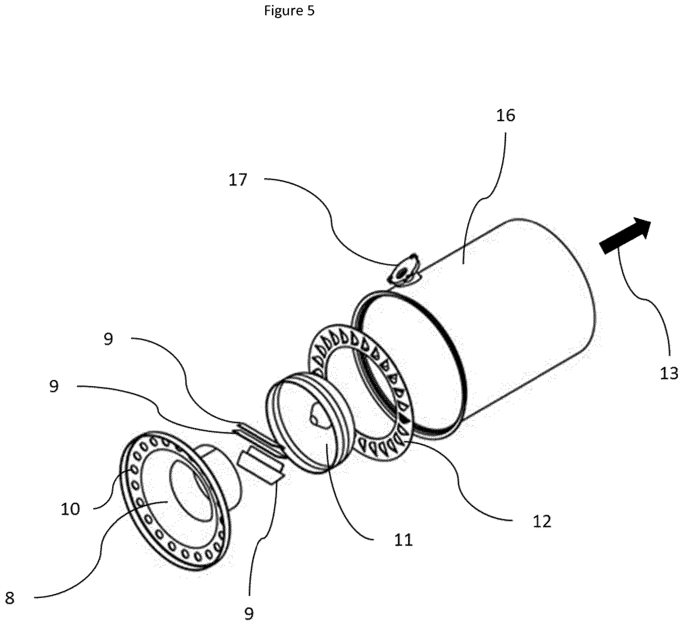

Figure 5 is an exploded view of the mixing device of the present invention illustrating the relevant parts thereof as well as the means of order of assembly, which will be described in more detail hereafter. The flow guiding device (8) is typically composed of two parts (not shown) comprising a pipe part with slots cut for vanes (9) forming the contraction (nozzle) and a pressed and punched part forming the circular device having openings (10) in the periphery thereof as well as a contraction for engaging with the pipe part. The flow deflecting device (11) is typically deep drawn and the swirling baffle (12) is engaging with the deflecting device and full welded from the outside. All these parts fits into the housing (16) which is further equipped with a reductant dosing module fixture (17) wherein this fixture is arranged in the housing creating an opening from the outside for introducing a liquid into the exhaust gases when the after-treatment system is in operation.

Figure 6 illustrates a flow guiding device (8) which forms part of the mixing device of the present invention. The flow guiding device (8) as shown is circular and forms a nozzle for directing the exhaust gases towards the flow deflecting device as shown in figures 2-4 and has several bypass openings (10) located in the periphery of the guiding device.

Figure 7 illustrates a flow deflection device (11) having swirling baffle (12) located in a periphery of the deflection device. Swirling vanes (26) are part of the baffle (12) which create the swirling of the exhaust gas mixture. Swirling vanes (26) swirls the exhaust gases passing through the swirling baffle opening, such that it swirls and directs the flow of exhaust gases towards the longitudinal axis of the after-treatment system. This eliminates low pressure zone after flow deflecting device and further mixes exhaust gases and makes the distribution of both flow and reductant uniform at the face of the catalyst, thus improving catalytic reduction efficiency

The mixing device of the present invention may be made by various production methods, and herein below is one way of making an embodiment of the device described in more detail with reference to the figures 1-7.

The flow guiding device (8) may be in two parts wherein the pipe part is laser cut and the circular part with openings (10) is pressed and punched, and the guiding device (8) then forms a nozzle. The pipe part of the guiding device (8) has slots cut for making it ready to receive vanes (9). The vanes (9) are laser cut and bend. The two parts of the guiding device (8) are full welded from the outside, and vanes (9) are slid in and welded from the outside. The swirling baffle (12) is laser cut and pressed, and deflecting device (11) is deep drawn. The swirling baffle (12) and deflecting device (11) are assembled by full welding from the outside. The housing (16) is laser cut (including hole for dosing module), rolled and welded, end treatments are pressed. The final assembly comprises the swirling baffle (12) and deflecting device (11) being pushed into housing (16) and welded through slots in the housing. The flow guiding device (8) having the vanes (9) is pushed in and fully welded inside the housing (16). Furthermore, the dosing module fixture (17) is fully welded in the wall of the housing. All material is stainless steel.

All headings and sub-headings are used herein for convenience only and should not be construed as limiting the invention in any way.

Recitation of ranges of values herein are merely intended to serve as a short method of referring individually to each separate value falling within the range, unless other-wise indicated herein, and each separate value is incorporated into the specification as if it were individually recited herein. Unless otherwise stated, all exact values provided herein are representative of corresponding approximate values (e.g., all exact exemplary values provided with respect to a particular factor or measurement can be considered to also provide a corresponding approximate measurement, modified by "about", where appropriate).

All methods described herein can be performed in any suitable order unless other-wise indicated herein or otherwise clearly contradicted by context.

The terms "a" and "an" and "the" and similar referents as used in the context of describing the invention are to be construed to insert both the singular and the plural, unless otherwise indicated herein or clearly contradicted by context. Thus, "a" and "an" and "the" may mean at least one, or one or more.

The term "and/or" as used herein is intended to mean both alternatives as well as each of the alternatives individually. For instance, expression "xxx and/or yyy" means "the xxx and yyy; the xxx; or the yyy", all three alternatives are subject to individual embodiments.

The use of any and all examples, or exemplary language (e.g., "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The citation of patent documents herein is done for convenience only and does not reflect any view of the validity, patentability and/or enforceability of such patent documents.

The description herein of any aspect or embodiment of the invention using terms such as "comprising", "having", "including" or "containing" with reference to an element or elements is intended to provide support for a similar aspect or embodiment of the invention that "consists of', "consists essentially of', or "substantially comprises" that particular element or elements, unless otherwise stated or clearly contradicted by context (*e.g*., a composition described herein as comprising a particular element should be understood as also describing a composition consisting of that element, unless otherwise stated or clearly contradicted by context).

## Claims

1. Device (3) for evaporating liquid spray and subsequent mixing into exhaust gases from a combustion engine comprising a housing (16) that defines a longitudinal axis, and which comprises:
a) an inlet (14, 19) of the exhaust gases,
b) an outlet (15, 20) of the exhaust gases,
c) a flow guiding device (8) located within the housing,
d) a flow deflecting device (11) for deflecting a gas flow coming from the flow guiding device (8),
e) a redirecting zone (24) for redirecting the flow coming from the deflecting device to the outlet,
wherein the flow guiding device (8) further comprises a bypass opening (10) that establish a fluid communication between a zone upstream the flow guiding device (8) and the redirecting zone (24),
**characterised in that** the device (3) further comprises
f) a swirling baffle (12) located at the redirecting zone (24) and fixed to the flow deflecting device (11), said swirling baffle (12) further comprising openings and/or swirling vanes (26).

2. Device according to claim 1, **characterised in that** the flow guiding device (8) comprises a nozzle for directing the exhaust gases towards the flow deflecting device (11).

3. Device according to any one of the preceding claims, **characterised in that** the flow guiding device comprises a plurality of guiding vanes (9) for diffusing the flow towards the flow deflecting device.

4. Device according to any one of the preceding claims, **characterised in that** it comprises a plurality of bypass openings arranged along the perimeter of the guiding device.

5. Device according to any one of the preceding claims, **characterised in that** the flow deflecting device is arranged to deflect the flow in a generally backward direction.

6. Device according to any one of the preceding claims, **characterised in that** the flow deflecting device comprises a conical bulge in its centre.

7. Device according to claim 1 **characterised in that** said swirling baffle is also fixed to the housing.

8. Device according to any one of claims 1 and 7, **characterised in that** the bypass opening and the swirling baffle are located facing each other.

9. Device according to any one of claims 1, 6, 7 and 8, **characterised in that** the swirling baffle is located between the conical bulge and the bypass opening.

10. Device according to any of the preceding claims, **characterised in that** it comprises a dosing module (21) for inserting the liquid into the exhaust gases located between the inlet of the exhaust gases and the flow guiding device.

## Patentansprüche

1. Vorrichtung (3) zum Verdampfen von Flüssigkeitsspray und anschließenden Einmischen in Abgase von einem Verbrennungsmotor, umfassend ein Gehäuse (16), das eine Längsachse definiert, und welche Folgendes umfasst:
a) einen Einlass (14, 19) der Abgase,
b) einen Auslass (15, 20) der Abgase,
c) eine Strömungsleitvorrichtung (8), die sich innerhalb des Gehäuses befindet,
d) eine Strömungsablenkvorrichtung (11) zum Ablenken einer von der Strömungsleitvorrichtung (8) kommenden Gasströmung,
e) eine Weiterleitungszone (24) zum Weiterleiten der von der Ablenkvorrichtung kommenden Strömung zum Auslass,
wobei die Strömungsleitvorrichtung (8) ferner eine Bypassöffnung (10) umfasst, die eine Fluidverbindung zwischen einer Zone stromaufwärts der Strömungsleitvorrichtung (8) und der Weiterleitungszone (24) herstellt,
**dadurch gekennzeichnet, dass** die Vorrichtung (3) weiterhin Folgendes umfasst
f) eine Verwirbelungsblende (12), die an der Weiterleitungsone (24) angeordnet und an der Strömungsablenkvorrichtung (11) befestigt ist, wobei die Verwirbelungsblende (12) ferner Öffnungen und/oder Verwirbelungsschaufeln (26) umfasst.

2. Vorrichtung nach Anspruch 1, **dadurch gekennzeichnet, dass** die Strömungsleitvorrichtung (8) eine Düse zum Leiten der Abgase in Richtung zur Strömungsablenkvorrichtung (11) umfasst.

3. Vorrichtung nach einem der vorhergehenden Ansprüche, **dadurch gekennzeichnet, dass** die Strömungsleitvorrichtung eine Vielzahl von Leitschaufeln (9) zur Diffusion der Strömung in Richtung zur Strömungsablenkvorrichtung umfasst.

4. Vorrichtung nach einem der vorhergehenden Ansprüche, **dadurch gekennzeichnet, dass** sie eine Vielzahl von Bypassöffnungen umfasst, die entlang des Umfangs der Leitvorrichtung angeordnet sind.

5. Vorrichtung nach einem der vorhergehenden Ansprüche, **dadurch gekennzeichnet, dass** die Strömungsablenkvorrichtung angeordnet ist, um die Strömung in eine im Allgemeinen rückwärtige Richtung abzulenken.

6. Vorrichtung nach einem der vorhergehenden Ansprüche, **dadurch gekennzeichnet, dass** die Strömungsablenkvorrichtung in ihrer Mitte eine konische Ausbuchtung umfasst.

7. Vorrichtung nach Anspruch 1, **dadurch gekennzeichnet, dass** die Verwirbelungsblende auch an dem Gehäuse befestigt ist.

8. Vorrichtung nach einem der Ansprüche 1 und 7, **dadurch gekennzeichnet, dass** die Bypassöffnung und die Verwirbelungsblende einander gegenüberliegend angeordnet sind.

9. Vorrichtung nach einem der Ansprüche 1, 6, 7 und 8, **dadurch gekennzeichnet, dass** die Verwirbelungsblende zwischen der konischen Ausbuchtung und der Bypassöffnung angeordnet ist.

10. Vorrichtung nach einem der vorhergehenden Ansprüche, **dadurch gekennzeichnet, dass** sie ein Dosiermodul (21) zum Einbringen der Flüssigkeit in die Abgase umfasst, das zwischen dem Einlass der Abgase und der Strömungsleitvorrichtung angeordnet ist.

## Revendications

1. Dispositif (3) pour évaporer un spray de liquide et sa mélange ultérieure dans les gaz d'échappement d'un moteur à combustion comprenant un boîtier (16) qui définit un axe longitudinal, et qui comprend :
a) une entrée (14, 19) des gaz d'échappement,
b) une sortie (15, 20) des gaz d'échappement,
c) un dispositif de guidage de flux (8) situé à l'intérieur du boîtier,
d) un dispositif de déviation de flux (11) pour dévier un flux de gaz provenant du dispositif de guidage de flux (8),
e) une zone de redirection (24) pour rediriger le flux provenant du dispositif de déviation vers la sortie,
dans lequel le dispositif de guidage de flux (8) comprend en outre une ouverture de dérivation (10) qui établit une communication fluidique entre une zone en amont du dispositif de guidage de flux (8) et la zone de redirection (24),
**caractérisé en ce que** le dispositif (3) comprend en outre
f) un déflecteur tourbillonnant (12) située au niveau de la zone de redirection (24) et fixée au dispositif de déviation de flux (11), ledit déflecteur tourbillonnant (12) comprenant en outre des ouvertures et/ou des aubes tourbillonnaires (26).

2. Dispositif selon la revendication 1, **caractérisé en ce que** le dispositif de guidage de flux (8) comprend une buse pour diriger les gaz d'échappement vers le dispositif de déviation de flux (11).

3. Dispositif selon l'une quelconque des revendications précédentes, **caractérisé en ce que** le dispositif de guidage de flux comprend une pluralité d'aubes de guidage (9) pour diffuser le flux vers le dispositif de déviation de flux.

4. Dispositif selon l'une quelconque des revendications précédentes, **caractérisé en ce qu'**il comprend une pluralité d'ouvertures de dérivation disposées le long du périmètre du dispositif de guidage.

5. Dispositif selon l'une quelconque des revendications précédentes, **caractérisé en ce que** le dispositif de déviation de flux est agencé pour dévier le flux dans une direction généralement vers l'arrière.

6. Dispositif selon l'une quelconque des revendications précédentes, **caractérisé en ce que** le dispositif de déviation de flux comprend un renflement conique en son centre.

7. Dispositif selon la revendication 1, **caractérisé en ce que** ledit déflecteur tourbillonnant est également fixé au boîtier.

8. Dispositif selon l'une quelconque des revendications 1 et 7, **caractérisé en ce que** l'ouverture de dérivation et le déflecteur tourbillonnant sont situés en regard l'un de l'autre.

9. Dispositif selon l'une quelconque des revendications 1, 6, 7 et 8, **caractérisé en ce que** le déflecteur tourbillonnant est situé entre le renflement conique et l'ouverture de dérivation.

10. Dispositif selon l'une quelconque des revendications précédentes, **caractérisé en ce qu'**il comprend un module de dosage (21) pour insérer le liquide dans les gaz d'échappement situé entre l'entrée des gaz d'échappement et le dispositif de guidage de flux.
